Europäisches Patentamt

European Patent Office

Office européen des brevets

(11) Numéro de publication: **0 032 869**
A2

# DEMANDE DE BREVET EUROPEEN

(21) Numéro de dépôt: **81400080.8**

(51) Int. Cl.³: **A 47 K 1/09**

(22) Date de dépôt: **21.01.81**

(30) Priorité: **21.01.80 FR 8001244**

(71) Demandeur: **Woltz, René, 30, rue Troyon, F-92310 Sevres (FR)**

(43) Date de publication de la demande: **29.07.81 Bulletin 81/30**

(72) Inventeur: **Woltz, René, 30, rue Troyon, F-92310 Sevres (FR)**

(84) Etats contractants désignés: **AT BE CH DE GB IT LI LU NL SE**

(74) Mandataire: **Weinstein, Zinovi et al, Cabinet Z. WEINSTEIN 20, Avenue de Friedland, F-75008 Paris (FR)**

(54) **Dispositif par exemple musical, commandé par la pose et la dépose d'un objet.**

(57) L'invention concerne un dispositif du type musical, qui est commandé par la pose et la dépose d'un objet, et qui peut en particulier former le support de brosse à dents.

Le boîtier (10) du dispositif comprend un mécanisme (11) de jeu d'une mélodie, dont le fonctionnement est commandé par le manche (16) d'une brosse à dents selon que celle-ci est logée dans le boîtier (10) ou sortie de ce boîtier.

L'invention s'applique notamment à un support de brosse à dents pour enfants.

0032869

-1-

<u>"Dispositif, par exemple musical, commandé par la
pose et la dépose d'un objet".</u>-

L'invention concerne en général un dispositif qui
forme support d'un objet destiné à être manipulé à
des intervalles plus ou moins réguliers ou irréguliers,
et qui comprend de plus des moyens de production ou
de reproduction de signaux lumineux ou sonores, par
exemple une mélodie, ou même de mouvements de certaines parties mobiles du dispositif, et plus particulièrement un dispositif du type "musical" dont le
fonctionnement est commandé par la pose ou la dépose
d'un objet.

De nombreux dispositifs sont utilisés pour servir de
support à des objets manipulés plus ou moins fréquemment, qu'il est nécessaire de replacer sur leur
support après utilisation, par exemple dans un but de
rangement, ou pour toutes autres raisons voulues.

Il serait intéressant de donner à ces supports une
fonction supplémentaire, permettant par exemple de
signaler à l'utilisateur une durée optimale d'utilisation d'un objet, ou bien de lui signaler qu'il doit
replacer l'objet sur son support après un certain
temps d'utilisation.

0032869

L'invention propose un tel dispositif, dans lequel on a combiné les fonctions de support d'un objet et de production ou de reproduction de signaux lumineux ou sonores, associés ou non à des mouvements de certaines parties mobiles du dispositif, de façon à déterminer et à signaler une durée optimale d'utilisation de l'objet, par exemple.

L'invention propose donc un tel dispositif, caractérisé en ce qu'il comprend des moyens de commande du fonctionnement des moyens précités de production ou de reproduction de signaux qui sont déclenchés par la pose et la dépose, ou l'accrochage ou le décrochage de l'objet précité sur le dispositif.

Selon une autre caractéristique de l'invention, la durée de production ou de reproduction des signaux précités est prédéterminée, et correspond par exemple à une durée recommandée de l'utilisation de l'objet.

Selon encore une autre caractéristique de l'invention, ce dispositif forme un support d'une brosse à dents, dont le décrochage de sur le support déclenche le jeu d'une mélodie dont la durée correspond à celle d'un brossage correct des dents.

Un tel dispositif est destiné plus particulièrement à des enfants, et permet de les inciter à se brosser les dents pendant un temps minimum.

L'invention sera mieux comprise, et d'autres buts, caractéristiques, détails et avantages de celle-ci apparaîtront plus clairement au cours de la description explicative qui va suivre faite en référence aux dessins schématiques annexés donnés uniquement à titre d'exemple illustrant un mode de réalisation de l'invention, et dans lesquels :

La figure 1 est une vue de face d'un mode de réalisation d'un dispositif selon l'invention.

La figure 2 est une vue en coupe transversale de ce dispositif.

Dans les dessins, on a représenté une application d'un dispositif selon l'invention, à un support de brosse à dents pour enfants.

Le dispositif se présente avantageusement sous la forme d'un jouet, par exemple d'une tête d'ourson dans le cas représenté.

Ce dispositif comprend essentiellement un boîtier 10, moulé par exemple en deux parties acollées, qui contient un mécanisme 11 de reproduction ou de jeu d'une mélodie enfantine. Le mécanisme 11 représenté sur l'un des dessins est du type à lames vibrantes sonores 12, associé à un cylindre tournant 13 dont la surface est garnie de picots coopérant avec les extrémités des lames vibrantes 12, et dont la répartition sur le cylindre 13 varie en fonction de la mélodie voulue. Le cylindre 13 est entraîné en rotation par l'intermédiaire d'un moteur 14, qui peut être un moteur mécanique à ressort, ou bien un petit moteur électrique alimenté par une pile, le mécanisme 11 comprenant encore un moyen de mise en route et d'arrêt constitué par exemple par une petite pale rotative 15 destinée à être immobilisée en rotation par l'extrémité du manche 16 d'une brosse à dents quand celle-ci se trouve rangée correctement dans le boîtier 10.

La partie supérieure du boîtier 10 comprend à cet effet une ouverture 17, permettant l'introduction du manche 16 de la brosse à dents, et des moyens de guidage 18, de telle sorte que, quand la brosse à dents est rangée à l'intérieur du boîtier 10, l'extrémité inférieure du manche 16 vienne au niveau de la pale rotative 15 pour immobiliser celle-ci en rotation et arrêter le mécanisme 11.

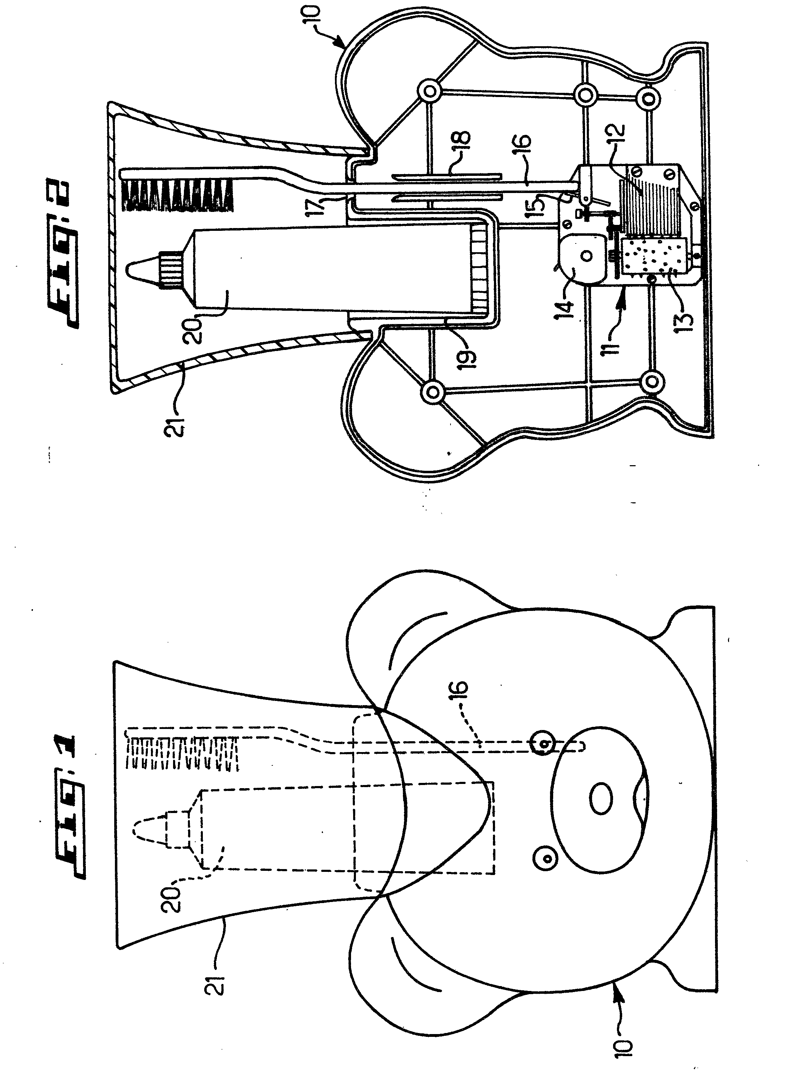

On comprend que, quand le moteur d'entraînement 14 est un moteur électrique, la pale rotative 15 peut être remplacée par un contact électrique qui est ouvert par l'extrémité inférieure du manche 16 de la brosse à dents, quand celle-ci est rangée dans le boîtier 10 comme représenté en figure 2.

Comme représenté sur les dessins, la partie supérieure du boîtier 10 peut comprendre encore une cavité 19 formant logement d'un tube 20 de pâte dentifrice, et l'on peut associer au boîtier 10 un gobelet 21, par exemple en forme de chapeau, qui viendra coiffer et dissimuler la brosse à dents et le tube 20 logés dans le boîtier 10.

Par un système de levier, des biellettes ou analogues, on peut également commander, au moyen du mécanisme 11, le mouvement de certaines parties mobiles du boîtier 10, par exemple les yeux et/ou les oreilles de la tête d'ourson.

Le fonctionnement de ce dispositif est des plus simples :

Pour se laver les dents, l'enfant retire tout d'abord le gobelet 21 ce qui lui donne accès à la brosse à dents et au tube 20 de pâte dentifrice.

Lorsqu'il sort la brosse à dents du boîtier 10, le mécanisme 11 est mis en route, et produit une mélodie dont la durée peut être prédéterminée pour correspondre à celle d'un brossage correct des dents. A la fin de la mélodie, l'enfant replace la brosse à dents et le tube 20 dans leurs logements du boîtier 10, et replace ensuite le gobelet 21 sur le boîtier 10 après s'être rincé la bouche. On comprend que l'on peut apporter de nombreuses modifications au dispositif qui vient d'être décrit. On peut par exemple remplacer le mécanisme 11 du type à lames sonores vibrantes, par un tourne-disque miniature ou par un lecteur miniature de bande magnétique.

On peut, bien entendu, appliquer le dispositif selon l'invention dans de nombreux autres domaines, chaque fois qu'il est nécessaire ou utile de commander l'émission de signaux lumineux ou sonores, ou la production de mouvements correspondant à la pose et à la dépose d'un objet sur un support.

Bien entendu, l'invention n'est nullement limitée au mode de réalisation décrit et représenté qui n'a été donné qu'à titre d'exemple. En particulier, elle comprend tous les moyens constituant des équivalents techniques des moyens décrits, ainsi que leurs combinaisons, si celles-ci sont exécutées suivant son esprit et mises en oeuvre dans le cadre de la protection comme revendiquée.

-6-

Revendications

1.- Dispositif formant support d'un objet destiné à être manipulé à des intervalles réguliers ou irréguliers, ce dispositif comprenant des moyens de production ou de reproduction de signaux lumineux ou sonores, par exemple d'une mélodie, caractérisé en ce qu'il comprend des moyens de commande de fonctionnement des moyens précités de production ou de reproduction de signaux qui sont déclenchés par la pose et la dépose, ou l'accrochage et le décrochage de l'objet précité sur le dispositif.

2.- Dispositif selon la revendication 1, caractérisé en ce que la durée de production ou de reproduction des signaux précités est déterminée, et correspond par exemple à la durée de l'utilisation de l'objet précité.

3.- Dispositif selon la revendication 1 ou 2, caractérisé en ce que les moyens de production ou de reproduction sont du type mécanique ou électromécanique, et comprennent par exemple des lames vibrantes sonores associées à un cylindre rotatif à picots, entraînés par un moteur à ressort ou un moteur électrique, ou un tourne-disque miniature, entraîné par un moteur électrique.

4.- Dispositif selon la revendication 1 ou 2, caractérisé en ce que les moyens de reproduction ou de production des signaux sont du type électrique ou électromécanique, et comprennent par exemple un lecteur miniature de bande magnétique commandé éventuellement par un circuit électronique.

5.- Dispositif selon l'une des revendications précédentes, caractérisé en ce qu'il forme un support d'une brosse à dents, dont le décrochage de sur le support déclenche le jeu d'une mélodie dont la durée correspond à celle d'un brossage correct des dents.

6.- Dispositif selon la revendication 5, caractérisé en ce qu'il comprend un contact ou moyen de commande d'interruption du jeu de la mélodie, destiné à être actionné par le manche de la brosse à dents quand celui-ci est introduit dans un logement correspondant du dispositif.

7.- Dispositif selon la revendication 5 ou 6, caractérisé en ce que le support se présente sous forme d'un jouet pour enfant.

*Fig.* 1

*Fig.* 2

1/1

0032869